# EUROPÄISCHE PATENTSCHRIFT

(11) **EP 1 245 601 B1**
(45) Veröffentlichungstag und Bekanntmachung des Hinweises auf die Patenterteilung: **17.05.2006**
(21) Anmeldenummer: 02002671.2
(22) Anmeldetag: 06.02.2002
(51) Int. Cl.: C08G 18/10, C09J 175/04, C09K 3/10

(54) **Metallfreie silanterminierte Polyurethane, ein Verfahren zu deren Herstellung und deren Anwendung**
Metalfree silane terminated polyurethanes, a process for their preparation and their use
Polyuréthanes ne comportant pas de métal terminés par des groupes de silane, procédé pour leur préparation et leur utilisation

(30) Priorität: 29.03.2001 DE 10115698
(43) Veröffentlichungstag der Anmeldung: 02.10.2002
(73) Patentinhaber: Degussa AG, 40474 Düsseldorf (DE)
(72) Erfinder: Mack, Helmut, Dr., 79618 Rheinfelden (DE); Barfurth, Dieter, 79618 Rheinfelden (DE)

(56) Entgegenhaltungen:
- EP-A- 0 676 403
- WO-A-98/36007
- DE-A- 2 307 794
- FR-A- 2 158 561

## Beschreibung

Die vorliegende Erfindung betrifft silanterminierte Polyurethane, ein Verfahren zu deren Herstellung und deren Anwendung.

Im Bauwesen dienen Fugen dem Ausgleich von Bewegungen zwischen einzelnen Bauelementen, die zum Beispiel durch Wärmedehnungen oder Setzvorgänge verursacht werden. In der Regel verwendet man zum Verschließen der Fugen Dichtstoffe, beispielsweise nach DIN EN ISO 11600. Neben der Abdichtfunktion müssen die Dichtstoffe auch Bewegungen durch elastische Verformung ausgleichen. Als Basispolymere für die Herstellung dieser Dichtstoffe dienen Silicone, Acrylate, Butylkautschuke, Polysulfide, Polyurethane und MS-Polymere. Silanvernetzende Polyurethane sind neu für diese Anwendung.

Die Umsetzung von sekundären Aminosilanen mit isocyanathaltigen Polyurethanpräpolymeren führt zu silanterminierten Polyurethanen, die mittels Feuchtigkeit vemetzt werden können, vgl. u. a. DE-OS 23 07 794. Die Vemetzung entsprechender Dicht- und Klebmassen kann durch Zusatz eines Katalysators beschleunigt werden.

Klassische isocyanathaltige Polyurethanpräpolymere werden im Allgemeinen aus Polyolen, - meist aus Ethylenoxid und/oder Propylenoxid aufgebaut -, und aliphatischen oder aromatischen Isocyanaten erhalten.

Die mittels Zinnverbindungen katalysierte Umsetzung von isocyanathaltigen Polyurethanpräpolymeren mit aliphatischen bzw. aromatischen sekundären Aminosilanen zu silanterminierten Polyurethanen für Kleb- und Dichtstoffanwendungen wird beispielsweise in EP 0 676 403 A1 beschrieben.

Alternativ können auch Isocyanatosilane, wie zum Beispiel OCN-(CH₂)₃Si(X)₃, wobei X eine Alkoxygruppe, wie Methoxy oder Ethoxy, darstellt, mit hydroxylhaltigen Polyurethanpräpolymeren zu silanterminierten Polyurethanen umgesetzt werden (US 4,345,053). Hierbei ist von Vorteil ist, dass bei der Silanvernetzung kein gasförmiges Nebenprodukt wie bei der klassischen Urethanvernetzung frei wird. So können isocyanatfreie Systeme, wie Beschichtungszusammensetzungen, Lacke, Klebstoffe, Dichtstoffe, weitgehend gefahrlos formuliert werden, da flüchtige Isocyanatmonomere, z. B. Toluylendiisocyanat (TDI), im Verdacht stehen, sehr gesundheitsschädlich zu sein.

Der vorliegenden Erfindung lag die Aufgabe zugrunde, ein verbessertes silanterminiertes Polyurethan insbesondere für Kleb- und Dichtstoffanwendungen bereitzustellen.

Die gestellte Aufgabe wird erfindungsgemäß entsprechend den Angaben der Patentansprüche gelöst.

Überraschenderweise wurde gefunden, dass die Umsetzung aliphatischer sekundärer Aminosilane der allgemeinen Formel (Ia) oder (Ib) mit isocyanathaltigen Polyurethanpräpolymeren bei Abwesenheit eines Metallkatalysators, insbesondere eines Zinnkatalysators, zu farblosen und niederviskosen silanterminierten Polyurethanen führt. Ein Metallkatalysator, wie z. B. Dibutylzinndilaurat (DBTL), ist für die vorliegende Silanterminierungsreaktion nicht notwendig. Dies ist von Vorteil, da insbesondere ein erhöhter Gehalt an Zinnverbindungen die thermische Spaltung von -NR-CO-NR-Gruppen begünstigt.

Erfindungsgemäß niederviskose, metallfreie silanterminierte Polyurethane können in einfacher und wirtschaftlicher Weise mit weiteren Additiven, wie Füllstoffen, Weichmachern, Thixotropiermitteln, Stabilisatoren, Pigmenten usw., zu Kleb- und Dichtstoffen formuliert werden.

Zudem steigt auf Grund verkürzter Topfzeiten bei der Silanterminierungsreaktion die Produktivität der Präpolymerherstellung.

Darüber hinaus sind erfindungsgemäß hergestellte silanterminierte Polyurethane besonders umweltverträglich, da im Wesentlichen frei von Resten an Metallkatalysatoren, d. h. metallfrei.

Von vorteilhafter Bedeutung bei der Herstellung von silanterminierten Polyurethanen ist auch die schnelle Umsetzung der Isocyanatgruppen des Polyurethanpräpolymers mit einem sekundären aliphatischen Aminosilan der allgemeinen Formel (Ia) oder (Ib), vorzugsweise mit DYNASYLAN® 1189 nach dem Reaktionsschema:

Präpolymer-NCO + nBu-NH-(CH₂)₃-Si(OMe)₃ → Präpolymer-NH-CO-nBuN-(CH₂)₃₋Si(OMe)₃.

Die denkbare, aber unerwünschte Nebenreaktion - unerwünscht, da viskositätserhöhend - der Kettenverlängerung wird beim erfindungsgemäßen Verfahren nicht beobachtet und somit wirkungsvoll und daher vorteilhaft unterdrückt:

"Präpolymer-NH-CO-nBuN-(CH₂)₃-Si(OMe)₃ + Präpolymer-NCO → Präpolymer-N(CO-NH-Präpolymer)-CO-nBuN-(CH₂)₃-Si(OMe)₃"

Gegenstand der vorliegenden Erfindung sind somit metallfreie, insbesondere zinnfreie, silanterminierte Polyurethane für Kleb- und Dichtmassen, wobei diese auf der Umsetzung mindestens eines aliphatischen sekundären Aminoalkylalkoxysilans der allgemeinen Formel (Ia)

R-NH-(CH₂)₃Si(R¹)ₓ(OR²)₍₃₋ₓ₎ (Ia)

oder mindestens eines aliphatischen sekundären Aminoalkylalkoxysilans der allgemeinen Formel (Ib)

R-NH-CH₂-CH(R¹)-CH₂-Si(R¹)ₓ(OR²)₍₃₋ₓ₎ (Ib)

wobei in den Formeln (Ia) und (Ib) R eine lineare oder verzweigte Alkylgruppe mit 1 bis 18 C-Atomen darstellt, R¹ für eine Methylgruppe und R² für eine Methyl- oder Ethylgruppe stehen und x gleich 0 oder 1 ist,
mit einem Polyurethanpräpolymer basieren.

Ferner ist Gegenstand der vorliegenden Erfindung ein metallfreies silanterminiertes Polyurethan, das erhältlich ist durch die Umsetzung mindestens eines aliphatischen sekundären Aminoalkylalkoxysilans der allgemeinen Formel (Ia)

R-NH-(CH₂)₃Si(R¹)ₓ(OR²)₍₃₋ₓ₎ (Ia)

oder mindestens eines aliphatischen sekundären Aminoalkylalkoxysilans der allgemeinen Formel (Ib)

R-NH-CH₂-CH(R¹)-CH₂-Si(R¹)ₓ(OR²)₍₃₋ₓ₎ (Ib)

wobei in den Formeln (Ia) und (Ib) R eine lineare, verzweigte oder cyclische (z. B. Cyclohexyl) Alkylgruppe mit 1 bis 18 C-Atomen, vorzugsweise mit 1 bis 6 C-Atomen, darstellt, R¹ für eine Methylgruppe und R² für eine Methyl- oder Ethylgruppe stehen und x gleich 0 oder 1 ist,
mit einem Polyurethanpräpolymer in Abwesenheit eines Metallkatalysators, wobei das Polyurethanpräpolymer mindestens eine endständige Isocyanatgruppe trägt.

Insbesondere führt man die erfindungsgemäße Umsetzung eines aliphatischen sekundären Aminoalkylalkoxysilans mit einem Polyurethanpräpolymer in Abwesenheit eines Zinnkatalysators durch. Als Zinnkatalysator wird nach dem Stand der Technik hier üblicherweise Dibutylzinndilaurat (DBTL) oder eine andere Dialkylzinndicarboxylat-Verbindung eingesetzt.

Bevorzugt setzt man dabei als sekundäres Aminoalkylalkoxysilan N-(n-Butyl)-3-aminopropyltrimethoxysilan, N-(n-Butyl)-3-aminopropyltriethoxysilan, . N-(n-Butyl)-3-aminopropyl-methyldimethoxysilan, N-(n-Butyl)-3-aminopropyl-methyldiethoxysilan, N-(n-Butyl)-3-amino-2-methyl-propyltrimethoxysilan, N-(n-Butyl)-3-amino-2-methyl-propyltriethoxysilan oder N-(n-Ethyl)-3-amino-2-methyl-propyltrimethoxysilan ein.

Als Polyurethanpräpolymer wird in der Regel ein Reaktionsprodukt aus einem Diol, beispielsweise so genannte Polyetherpolyole, wie einem Polyethylenoxid oder Polypropylenoxid mit endständigen Hydroxylgruppen und einem Molekulargewicht zwischen 200 bis 2 000 g/mol, oder einem Polyol, d. h. einem Polyetherpolyol oder einem Polyesterpolyol, bzw. deren Mischungen und mindestens einem Diisocyanat bezeichnet. Dabei wird in der Regel ein Überschuss an Diisocyanat eingesetzt, sodass die Polyurethanpräpolymere endständige lsocyanat(NCO)-Gruppen enthalten. Die Diol/Polyol-Komponente des Polyurethanpräpolymeren kann sowohl Polyether- wie auch Polyesterstruktur mit stark variierbarem Molekulargewicht aufweisen.

Als Diisocyanate kann man geeigneterweise sowohl aliphatische, z. B. Isophorondiisocyanat (IPDI), Hexamethylendiisocyanat (HDI), wie auch aromatischeVerbindungen, z. B. Toluylendiisocyanat (TDI), Diphenylmethandiisocyanat (MDI), verwenden.

Ferner bevorzugt man erfindungsgemäß ein Polyurethanpräpolymer auf der Basis eines aliphatischen Diisocyanats, vorzugsweise Isophorondiisocyanat (IPDI) oder Hexamethylendiisocyanat (HDI). Für Polyurethanpräpolymere auf der Basis eines aromatischen Diisocyanats ist Diphenylmethandiisocyanat (MDI) bevorzugt.

Darüber hinaus ist Gegenstand der vorliegenden Erfindung das Verfahren zur Herstellung eines metallfreien silanterminierten Polyurethans, wobei man mindestens ein aliphatisches sekundäres Aminoalkylalkoxysilan der allgemeinen Formel (Ia)

R-NH-(CH₂)₃Si(R¹)ₓ(OR²)₍₃₋ₓ₎ (Ia)

oder mindestens ein aliphatisches sekundäres Aminoalkylalkoxysilan der allgemeinen Formel (Ib)

R-NH-CH₂-CH(R¹)-CH₂-Si(R¹)ₓ(OR²)₍₃₋ₓ₎ (Ib)

wobei in den Formeln (Ia) und (Ib) R eine lineare oder verzweigte Alkylgruppe mit 1 bis 18 C-Atomen darstellt, R¹ für eine Methylgruppe und R² für eine Methyl- oder Ethylgruppe stehen und x gleich 0 oder 1 ist,
mit einem Polyurethanpräpolymer in Abwesenheit eines Metallkatalysators umsetzt, wobei das Polyurethanpräpolymer mindestens eine endständige Isocyanatgruppe trägt.

Weiterhin ist Gegenstand der vorliegenden Erfindung die Verwendung mindestens eines sekundären aliphatischen Aminosilans der allgemeinen Formel (Ia) oder (Ib) für die Herstellung eines erfindungsgemäßen metallfreien, vorzugsweise zinnfreien, silanterminierten Polyurethans insbesondere für Kleb- und Dichtstoffanwendungen.

### Im Allgemeinen führt man das erfindungsgemäße Verfahren wie folgt aus:

Zur Herstellung des Präpolymers kann man beispielsweise eine wasserfreie Mischung aus Polyetherdiol und Polyethertriol bei ca. 30 bis 40 °C mit einem Diisocyanat versetzen. Geeigneterweise führt man die Umetzung unter Schutzgasabdeckung und unter Ausschluss von Wasser durch. Üblicherweise lässt man die Mischung so lange bei ca. 70 °C reagieren, bis ein konstanter lsocyanat(NCO)-Gehalt erreicht wird. In der Regel wird der Gehalt an NCO während der Umsetzung überprüft, d. h. analysiert. Die Reaktionsmischung kann ferner ein Verdünnungs- bzw. Lösemittel, das vorzugsweise inert ist, beispielsweise Toluol, enthalten. Entsprechend dem Gehalt an NCO kann man nun ein sekundäres Aminosilan zugeben.

Die erfindungsgemäße Umsetzung des Polyurethanpräpolymers mit dem sekundären Aminosilan wird vorzugsweise bei 25 bis 80 °C durchgeführt, wobei das sekundäre Aminosilan bevorzugt in einem Überschuss von 5 bis 25 Mol-% zugegeben wird.

Der Ansatz wird geeigneterweise bei einer Temperatur im Bereich von 60 bis 75 °C, insbesondere bei rd. 70 °C, so lange gerührt, bis kein freies NCO mehr nachweisbar ist.

Ferner kann man dem Reaktionsgemisch der erfindungsgemäßen Umsetzung einen Wasserfänger" zusetzen, beispielsweise ein organofunktionelles Alkoxysilan, vorzugsweise Vinyltrimethoxysilan oder Vinyltriethoxysilan.

Erhalten wird so ein erfindungsgemäßes metallkatalysatorfreies, silanterminiertes Polyurethan, das man in vorteilhafter Weise als Einsatzstoff in Zubereitungen für Kleb- und Dichtstoffanwendungen verwenden kann.

Erfindungsgemäße Produkte sind in der Regel farblos und niedrigviskos.

Handelsübliche Vergleichsprodukte, d. h. Polyurethane (siehe Vergleichsbeispiel) nach dem Stand der Technik, besitzen in der Regel eine Viskosität im Bereich von 30 000 bis 60 000 mPa s.

Demgegenüber weisen erfindungsgemäße Polyurethane vorzugsweise eine Viskosität von 12 000 bis 25 000 mPa s, besonders bevorzugt von 15 000 bis 20 000 mPa s, auf (Viskositätswerte bei 25 °C nach DIN 53 015).

Erfindungsgemäße silanterminierte Polyurethane können somit vorteilhaft für die Herstellung von Zubereitungen für Kleb- und Dichtstoffanwendungen eingesetzt werden. Dabei kann man das erfindungsgemäße silanterminierte Polyurethan geeigneterweise als Basismaterial benutzen. Dazu legt man im Allgemeinen das erfindungsgemäße Polyurethan vor und mischt dieses zunächst mit Weichmacher. Bevorzugt folgt anschließend die Einarbeitung des Füllstoffs mit nachfolgender Entgasung der Masse. Danach werden in der Regel Trockenmittel, Haftvermittler und andere Additive zugesetzt. Die Masse wird üblicherweise gut durchmischt und beispielsweise in Kartuschen abgefüllt.

Kleb- und Dichtstoffe auf Basis von silanterminierten Polyurethanen enthalten außer den silanterminierten Polyurethanen vorzugsweise noch folgende Komponenten:

Füllstoffe und/oder Pigmente, Weichmacher, Trockenmittel, Haftvermittler, rheologische Additive, z. B. zur Erzeugung von Thixotropie, Stabilisatoren und Konservierungsmittel.

Somit ist auch Gegenstand der vorliegenden Erfindung die Verwendung erfindungsgemäßer metallfreier silanterminierter Polyurethane in Zubereitungen für Kleb- und Dichtstoffanwendungen.

Die vorliegende Erfindung wird durch die nachfolgenden Beispiele näher erläutert.

### Beispiel 1

### Herstellung eines metallfreien silanterminierten Polyurethans

Eine Mischung aus Polyetherdiol und Polyethertriol wird unter Stickstoff in den Reaktionskolben eingewogen. Um Spuren von Wasser zu beseitigen, wird der Ansatz auf 100 °C erwärmt und bei dieser Temperatur 30 Minuten im Stickstoffstrom behandelt. Nach Abkühlen auf 30 bis 40 °C wird unter Stickstoffüberlagerung und starkem Rührem Diphenylmethandiisocyanat (MDI) (1,5 Mol NCO pro Mol OH) zugegeben und anschließend langsam bis 70 °C erwärmt. Die Temperatur wird bis zum Erreichen eines konstanten lsocyanat(NCO)-Gehalts beibehalten (ca. 5 bis 6 Stunden). Der NCO-Gehalt wird per Titration nach DIN 53 185 bestimmt.

Entsprechend dem Gehalt an NCO wird in der zweiten Reaktionsstufe ein Überschuss an N-(n-Butyl)-3-amino-propyltrimethoxysilan und Vinyltrimethoxysilan (dient als Wasserfänger) bei 50 °C zugetropft. Der Ansatz wird dabei zunächst viskos und muss auf 70 °C erwärmt werden. Er wird so lange gerührt, bis kein freies NCO mehr nachweisbar ist. Die Masse wird noch warm in mit Stickstoff gespülte Behälter abgefüllt.

Eigenschaften des metallfreien silanterminierten Polyurethans nach Beispiel 1:

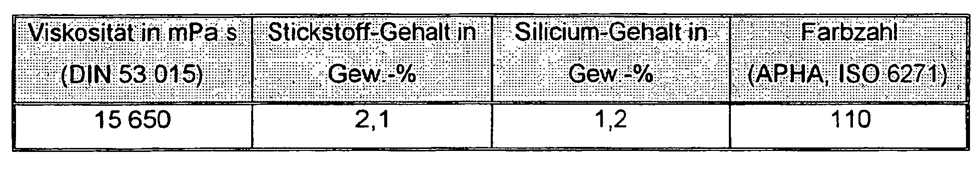

### Beispiel 2

### Kinetik der Umsetzung eines Polyurethanpräpolymers mit sekundären Aminosilanen

Ein Polyurethanpräpolymer, hergestellt aus einem Polyetherpolyol (Molekulargewicht 600) und MDI (Diphenylmethandiisocyanat), wird als 0,1-molare Toluollösung vorgelegt und auf 60 °C erwärmt. Dann wird eine stöchiometrische Menge sekundäres Aminosilan zugegeben und der Umsatz durch Probenahme und Titration des lsocanat(NCO)-Gehalts verfolgt. Außerdem wird die Temperaturänderung registriert.

### Ergebnisse:

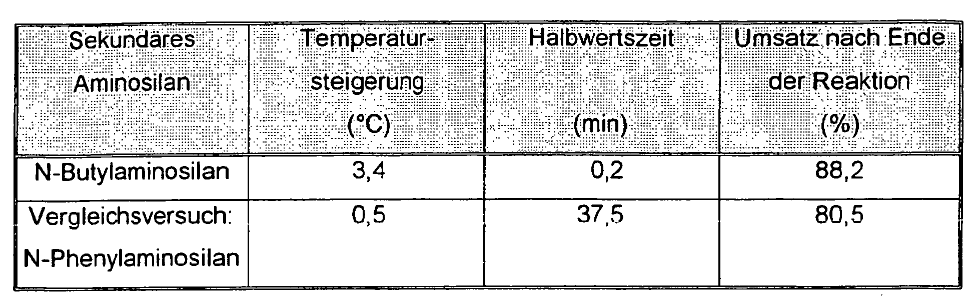

### Beispiel 3

### Herstellung einer Dichtmasse aus metallfreiem silanterminiertem Polyurethan

In das Arbeitsgefäß (1-Liter-.Dose) eines Laborplanetenmischers (LABMAX®, Hersteller: MOLTENI) werden 274 g silanterminiertes Polyurethan aus Beispiel 1 und 97 g Weichmacher (Diisodecylphthalat) eingewogen und 10 Minuten bei 200 UpM vermischt. Anschließend werden 347 g Kreide (oberflächenbehandelt mit Stearinsäure, 16 Stunden bei 110°C getrocknet) in die Polyurethan/Weichmacher-Mischung eingearbeitet. Nach vollständiger Kreidezugabe wird der Druck im Arbeitsraum des Mischers auf 100 mbar gesenkt und dadurch werden innerhalb von 15 Minuten flüchtige Bestandteile aus der Masse entfernt. Dann werden 11 g Trocknersilan (DYNASYLAN® VTMO, Vinyltrimethoxysilan) und 7 g Haftvermittlersilan (DYNASYLAN® DAMO-T, Diaminopropyltrimethoxysilan) zugegeben und unter Rühren erneut der Druck auf 100 mbar erniedrigt. Nach einer Behandlungsdauer von 10 Minuten werden 0,15 g Zinnkatalysator (METATIN® 740, Di-n-butyl-zinn-diketonat; Hersteller: ACIMA) zugegeben und nach weiteren 10 Minuten Rühren die Dose mit der Masse aus dem Mischer entnommen. Die fertige Dichtmasse wird aus der Ansatzdose in Kartuschen umgefüllt.

### Beispiel 4

### Prüfung der Dichtmassen aus Beispiel 3

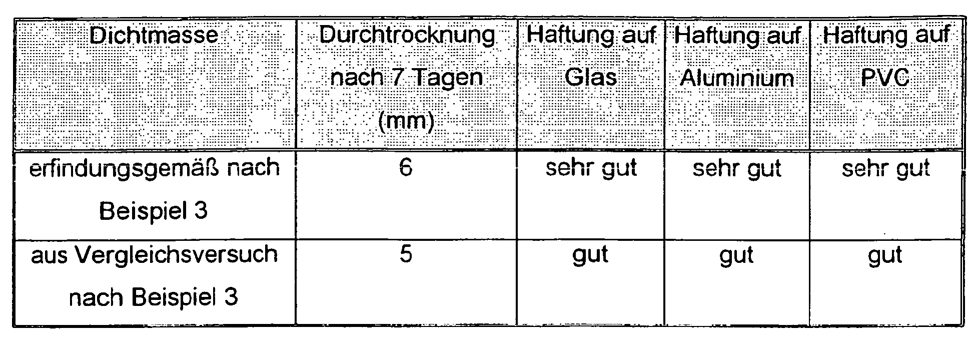

## Patentansprüche

1. Metallfreie silanterminierte Polyurethane für Kleb- und Dichtmassen, wobei diese auf der Umsetzung mindestens eines aliphatischen sekundären Aminoalkylalkoxysilans der allgemeinen Formel (Ia)
R-NH-(CH₂)₃Si(R¹)ₓ(OR²)₍₃₋ₓ₎ (Ia)
oder mindestens eines aliphatischen sekundären Aminoalkylalkoxysilans der allgemeinen Formel (Ib)
R-NH-CH₂-CH(R¹)-CH₂-Si(R¹)ₓ(OR²)₍₃₋ₓ₎ (Ib)
wobei in den Formeln (Ia) und (Ib) R eine lineare oder verzweigte Alkylgruppe mit 1 bis 18 C-Atomen darstellt, R¹ für eine Methylgruppe und R² für eine Methyl- oder Ethylgruppe stehen und x gleich 0 oder 1 ist,
mit einem Polyurethanpräpolymer basieren.

2. Metallfreies silanterminiertes Polyurethan, erhältlich durch die Umsetzung mindestens eines aliphatischen sekundären Aminoalkylalkoxysilans der allgemeinen Formel (Ia)
R-NH-(CH₂)₃Si(R¹)ₓ(OR²)₍₃₋ₓ₎ (Ia)
oder mindestens eines aliphatischen sekundären Aminoalkylalkoxysilans der allgemeinen Formel (Ib)
R-NH-CH₂-CH(R¹)-CH₂-Si(R¹)ₓ(OR²)₍₃₋ₓ₎ (Ib)
wobei in den Formeln (Ia) und (Ib) R eine lineare oder verzweigte Alkylgruppe mit 1 bis 18 C-Atomen darstellt, R¹ für eine Methylgruppe und R² für eine Methyl- oder Ethylgruppe stehen und x gleich O oder 1 ist,
mit einem Polyurethanpräpolymer in Abwesenheit eines Metallkatalysators, wobei das Polyurethanpräpolymer mindestens eine endständige Isocyanatgruppe trägt.

3. Silanterminiertes Polyurethan nach Anspruch 2,
**dadurch gekennzeichnet,**
**dass** man die Umsetzung eines aliphatischen sekundären Aminoalkylalkoxysilans mit einem Polyurethanpräpolymer in Abwesenheit eines Zinnkatalysators durchgeführt.

4. Silanterminiertes Polyurethan nach Anspruch 2 oder 3,
**dadurch gekennzeichnet,**
**dass** man als sekundäres Aminoalkylalkoxysilan N-(n-Butyl)-3-aminopropyltrimethoxysilan, N-(n-Butyl)-3-aminopropyltriethoxysilan, N-(n-Butyl)-3-aminopropyl-methyldimethoxysilan, N-(n-Butyl)-3-aminopropyl-methyldiethoxysilan, N-(Ethyl)-3-amino-2-methyl-propyltrimethoxysilan, N-(n-Butyl)-3-amino-2-methyl-propyltrimethoxysilan oder N-(n-Butyl)-3-amino-methyl-propyltriethoxysilan einsetzt.

5. Silanterminiertes Polyurethan nach einem der Ansprüche 2 bis 4,
**dadurch gekennzeichnet,**
**dass** man ein Polyurethanpräpolymer auf der Basis von Isophorondiisocyanat (IPDI), Hexamethylendiisocyanat (HDI), Toluylendiisocyanat (TDI) und/oder Diphenylmethandiisocyanat (MDI) einsetzt.

6. Verfahren zur Herstellung eines metallfreien silanterminierten Polyurethans nach einem der Ansprüche 1 bis 5, indem man mindestens ein aliphatisches sekundäres Aminoalkylalkoxysilan der allgemeinen Formel (Ia)
R-NH-(CH₂)₃Si(R¹)ₓ(OR²)₍₃₋ₓ₎ (Ia)
oder mindestens ein aliphatisches sekundäres Aminoalkylalkoxysilan der allgemeinen Formel (Ib)
R-NH-CH₂-CH(R¹)-CH₂-Si(R¹)ₓ(OR²)₍₃₋ₓ₎ (Ib)
wobei in den Formeln (Ia) und (Ib) R eine lineare oder verzweigte Alkylgruppe mit 1 bis 18 C-Atomen darstellt, R¹ für eine Methylgruppe und R² für eine Methyl- oder Ethylgruppe stehen und x gleich 0 oder 1 ist,
mit einem Polyurethanpräpolymer in Abwesenheit eines Metallkatalysators umsetzt, wobei das Polyurethanpräpolymer mindestens eine endständige Isocyanatgruppe trägt.

7. Verwendung mindestens eines sekundären aliphatischen Aminosilans der allgemeinen Formel (Ia) oder (Ib) für die Herstellung eines metallfreien silanterminierten Polyurethans nach mindestens einem der Ansprüche 1 bis 6 für Kleb- und Dichtstoffanwendungen.

8. Verwendung metallfreier silanterminierter Polyurethane nach mindestens einem der Ansprüche 1 bis 6 in Zubereitungen für Kleb- und Dichtstoffanwendungen.

## Claims

1. A metal-free silane-terminated polyurethane for adhesive and sealing compositions, which is based on the reaction of at least one aliphatic secondary aminoalkylalkoxysilane of the general formula (Ia)
R-NH-(CH₂)₃Si(R¹)ₓ(OR²)₍₃₋ₓ₎ (Ia)
or of at least one aliphatic secondary aminoalkylalkoxysilane of the general formula (Ib)
R-NH-CH₂-CH(R¹)-CH₂-Si(R¹)ₓ(OR²)₍₃₋ₓ₎ (Ib)
where, in the formulae (Ia) and (Ib), R is a linear or branched alkyl group having 1 to 18 C atoms, R¹ is a methyl group and R² is a methyl or ethyl group and x is 0 or 1,
with a polyurethane prepolymer.

2. A metal-free silane-terminated polyurethane obtainable by reacting at least one aliphatic secondary aminoalkylalkoxysilane of the general formula (Ia)
R-NH- (CH₂)₃Si(R¹)ₓ(OR²)₍₃₋ₓ₎ (Ia)
or at least one aliphatic secondary aminoalkylalkoxysilane of the general formula (Ib)
R-NH-CH₂-CH(R¹)-CH₂-Si(R¹)ₓ(OR²)₍₃₋ₓ₎ (Ib)
where, in the formulae (Ia) and (Ib), R is a linear or branched alkyl group having 1 to 18 C atoms, R¹ is a methyl group and R² is a methyl or ethyl group and x is 0 or 1,
with a polyurethane prepolymer in the absence of a metal catalyst, the polyurethane prepolymer carrying at least one terminal isocyanate group.

3. A silane-terminated polyurethane according to claim 2, **characterized in that** the reaction of an aliphatic secondary aminoalkylalkoxysilane with a polyurethane prepolymer is carried out in the absence of a tin catalyst.

4. A silane-terminated polyurethane according to either of claims 2 and 3, **characterized in that** N-(n-butyl)-3-aminopropyltrimethoxysilane, N-(n-butyl)-3-aminopropyltriethoxysilane, N-(n-butyl)-3-aminopropylmethyldimethoxysilane, N-(n-butyl)-3-aminopropylmethyldiethoxysilane, N-ethyl-3-amino-2-methylpropyltrimethoxysilane, N-(n-butyl)-3-amino-2-methylpropyltrimethoxysilane or N-(n-butyl)-3-aminomethylpropyltriethoxysilane is used as secondary aminoalkylalkoxy silane.

5. A silane-terminated polyurethane according to any one of claims 2 to 4, **characterized in that** a polyurethane prepolymer based on isophorone diisocyanate (IPDI), hexamethylene diisocyanate (HDI), tolylene diisocyanate (TDI) and/or diphenylmethane diisocyanate (MDI) is used.

6. A process for the preparation of a metal-free silane-terminated polyurethane according to any one of claims 1 to 5, in which at least one aliphatic secondary aminoalkylalkoxysilane of the general formula (Ia)
R-NH- (CH₂)₃Si(R¹)ₓ(OR²)₍₃₋ₓ) (Ia)
or at least one aliphatic secondary aminoalkylalkoxysilane of the general formula (Ib)
R-NH-CH₂-CH(R¹)-CH₂-Si(R¹)ₓ(OR²)₍₃₋ₓ₎ (Ib)
where, in the formulae (Ia) and (Ib), R is a linear or branched alkyl group having 1 to 18 C atoms, R¹ is a methyl group and R² is a methyl or ethyl group and x is 0 or 1,
is reacted with a polyurethane prepolymer in the absence of a metal catalyst, the polyurethane prepolymer carrying at least one terminal isocyanate group.

7. The use of at least one secondary aliphatic aminosilane of the general formula (Ia) or (Ib) for the preparation of a metal-free silane-terminated polyurethane according to at least one of claims 1 to 6 for adhesive and sealant applications.

8. The use of a metal-free silane-terminated polyurethane according to at least one of claims 1 to 6 in formulations for adhesive and sealant applications.

## Revendications

1. Polyuréthanes exempts de métal et terminés par des groupes silane pour masses collantes et masses d'étanchéité, basés sur la conversion d'au moins un aminoalkylalcoxysilane secondaire aliphatique répondant â la formule générale (Ia) :
R-NH-(CH₂)₃Si(R¹)ₓ(OR²)₍₃₋ₓ₎ (Ia)
ou d'au moins un aminoalkylalcoxysilane secondaire aliphatique répondant à la formule générale (Ib) :
R-NH-CH₂-CH(R¹)-CH₂-Si(R¹)ₓ(OR²)₍₃₋ₓ₎ (Ib)
avec dans les fornmles (Ia) et (Ib), R représentant un groupe alkyle linéaire ou ramifié comportant de 1 à 18 atomes C, R¹ représentant un groupe méthyle, et R² un groupe méthyle ou éthyle, alors que x vaut 0 ou 1,
conversion à l'aide d'un prépolymère de polyuréthane.

2. Polyuréthane exempt de métal et terminé par un groupe silane, pouvant être obtenu par conversion d'au moins un aminoalkylalcoxysilane secondaire aliphatique répondant à la formule générale (Ia) :
R-NH-(CH₂)₃Si(R¹)ₓ(OR²)₍₃₋ₓ₎ (Ia)
ou d'au moins un aminoalkylalcoxysilane secondaire aliphatique répondant à la formule générale (Ib) :
R-NH-CH₂-CH(R¹)-CH₂-Si(R¹)ₓ(OR²)₍₃₋ₓ₎ (Ib)
avec dans les formules (Ia) et (Ib), R représentant un groupe alkyle linéaire ou ramifié comportant de 1 à 18 atomes C, R¹ représentant un groupe méthyle et R² un groupe méthyle ou éthyle, alors que x vaut 0 ou 1,
conversion effectuée à l'aide d'un prépolymère de polyuréthane en l'absence d'un catalyseur métallique, le prépolymère de polyuréthane portant au moins un groupe isocyanate terminal.

3. Polyuréthane terminé par un groupe silane selon la revendication 2,
**caractérisé en ce que**
la conversion d'un aminoalkylalcoxysilane secondaire aliphatique à l'aide d'un prépolymère de polyuréthane est faite en l'absence d'un catalyseur d'étain.

4. Polyuréthane terminé par un groupe silane selon la revendication 2 ou 3,
**caractérisé en ce que**
comme aminoatkylalcoxysilane on utilise l'une des substances suivantes : N-(n-butyl)-3-aminopropyltriméthoxysilane, N-(n-butyl)-3-aminopropyltriéthoxysilane, N-(n-butyl)-3-aminopropyl-méthyldiméthoxysilane, N-(n-butyl)-3-aminopropyl-méthyldiéthoxysilane, N-(éthyl)-3-amino-2-méthyl-propyltriméthoxysilane, N-(n-butyl)-3-amino-2-méthylpropyltriméthoxysilane ou N-(n-butyl)-3-amino-méthyl-propyltriéthoxysilane.

5. Polyuréthane terminé par un groupe silane selon l'une des revendications 2 à 4,
**caractérisé en ce qu'**
on utilise un prépolymère de polyuréthane à base de diisocyanate d'isophorone (PDI), de diisocyanate d'hexaméthylène (HDI), de diisocyanate de toluylène (TDI) et/ou de diisocyanate de diphénylméthane (MDI).

6. Procédé de préparation d'un polyuréthane exempt de métal et terminé par un groupe silane selon l'une des revendications 1 à 5,
selon lequel on décompose au moins un aminoalkylalcoxysilane secondaire aliphatique répondant à la formule générale (Ia) :
R-NH-(CH₂)₃Si(R¹)ₓ(OR²)₍₃₋ₓ₎ (Ia)
ou au moins un aminoalkylalcoxysilane secondaire aliphatique répondant à la formule générale (Ib) :
R-NH-CH₂-CH(R¹)-CH₂-Si(R¹)ₓ(OR²)₍₃₋ₓ₎ (Ib)
avec dans les formules (Ia) et (Ib), R représentant un groupe alkyle linéaire ou ramifié comportant de 1 à 18 atomes C, R¹ représentant un groupe méthyle et R² un groupe méthyle ou éthyle, alors que x vaut 0 ou 1,
à l'aide d'un prépolymère de polyuréthane en l'absence d'un catalyseur métallique, le prépolymère de polyuréthane portant au moins un groupe isocyanate terminal.

7. Utilisation d'au moins un aminosilane aliphatique secondaire répondant à la formule générale (Ia) ou (Ib) pour la préparation d'un polyuréthane exempt de métal et terminé par un groupe silane selon au moins l'une des revendications 1 à 6, en vue d'applications sous forme de colle et de matière d'étanchéité.

8. Utilisation de polyuréthanes exempts de métal et terminés par des groupes de silane selon au moins l'une des revendications 1 à 6, dans des préparations en vue d'applications sous forme de colle et de matière d'étanchéité.
